(19) Europäisches Patentamt / European Patent Office / Office européen des brevets

(11) **EP 2 680 456 A1**

(12) # EUROPEAN PATENT APPLICATION

(43) Date of publication:
**01.01.2014 Bulletin 2014/01**

(51) Int Cl.:
*H04B 5/00* (2006.01)

(21) Application number: **12305761.4**

(22) Date of filing: **28.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventor: **Dhayni, Achraf**
**06220 Vallauris (FR)**

(74) Representative: **Hirsch & Associés**
**58, avenue Marceau**
**75008 Paris (FR)**

(54) **Gradual load modulation for near-field communication**

(57) A tag emulator device (TED) comprising an antenna (AT) adapted to create an electromagnetic coupling with another antenna (AR) of a reader device (RD) and circuitry adapted to modulate a magnetic field received on this antenna (AT) by modifying the load associated to the antenna (AT) according to modulating data. The load is comprised between a high value corresponding to a first value of the modulation data and a low value corresponding to a second value of the modulation data, and the circuitry is further adapted to modify gradually the load between two different values.

**FIG. 1**

**Description**

FIELD OF THE INVENTION

The invention relates to the field of Near-Field Communication (NFC) and more especially to the coexistence of a NFC function with other radio-frequency communication functions within a same device.

BACKGROUND OF THE INVENTION

Near-field communication (NFC) is a short-ranger wireless communication technology for exchanging data between devices over distances of centimeters to tens of centimeters. One example application for NFC is radio-frequency identification (RFID) where a reader device can detect and retrieve data from a tag equipped with an antenna.

NFC devices communicate via magnetic field induction where the two loop antennas are located within each other's near field, effectively forming an air-core transformer.

There are generally two modes of NFC: a passive communication mode where the initiating device provides a carrier field and the target device answers by modulating the existing field; and an active communication mode where both the initiating and target devices communicate by alternately generating their own field.

The target device can be a smartcard or a tag, but also more advanced devices like a mobile phone that can "emulate" the behavior of such a tag. For this reason, the passive communication mode of the target device is usually called "tag emulation mode". This device can be called "tag emulator" or transponder.

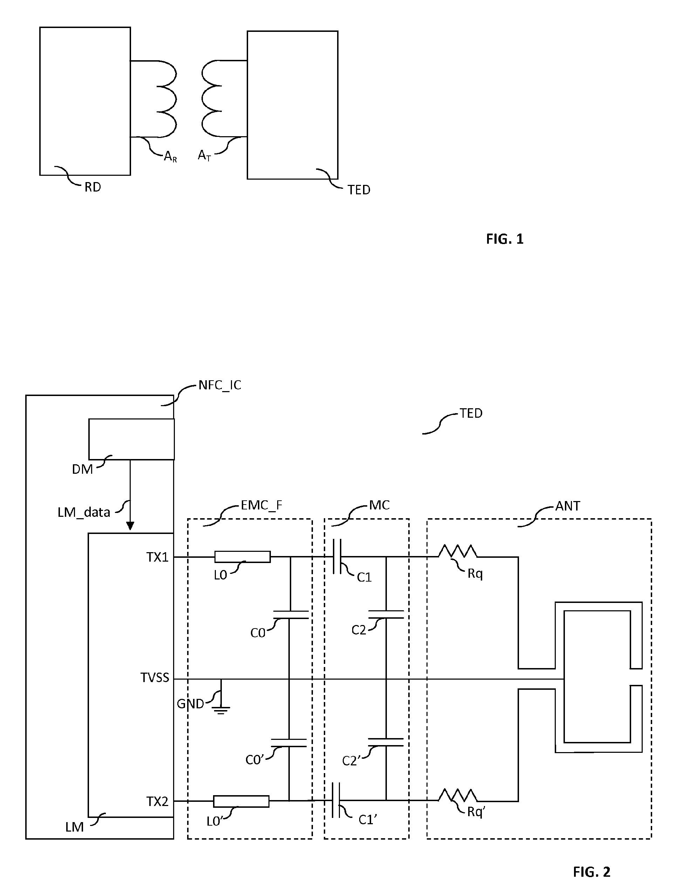

The figure 1 is a high-level schema showing a reader device RD and a tag-emulator (or transponder) device TED.

The reader and tag emulator devices RD, TED have both antennas, respectively $A_D$, $A_T$. The reader device RD generates through its antenna $A_D$ a magnetic field at a standardized frequency of 13.56 MHz. The tag emulator devices comprises a matching circuit MC which is tuned to this frequency, so that when both antennas are close enough they are coupled by the generated magnetic field. According to the most used standards specifications (e.g. ISO/IEC 14443), the magnetic field is a sinusoidal wave at 13.56 MHz.

The tag-emulator device TED also comprises a modulator MOD, which can be represented as an on/off switch. According to the status of this switch (on or off), the impedance of the electric circuit of the tag emulator device varies.

Due to the coupling of the antennas $A_R$, $A_T$, this variation causes amplitude changes to the antenna voltage of the reader device RD. This technique is called load modulation. Simply by loading the field more or less, information is transferred from the tag-emulator device TED to the reader device RD.

Load modulation is similar to a shallow amplitude modulation, with an amplitude index (or depth) of 10%.

A problem occurs when a NFC function is incorporated within a device having other radio-frequency related functionalities. For instance, a NFC device can coexist in a same electronic platform with other on-chip connectivity devices like a FM radio, a GPS, a Bluetooth or Wifi or WLAN-compliant communication interface, etc.

All these electronic circuits are compactly integrated to cohabit on the same chip or on a same platform. They usually share the same substrate, signals, power lines, ground lines and clock trees. This fact implies parasitic electro-magnetic coupling. The intrinsic non linearity of active devices causes out-of-band disturbances (mainly higher order signal frequency harmonics) that induce severe distortion between radio-frequency signals. These distortions are called "aliases".

In the worse cases, aliases may drive a circuit out of its correct operation mode.

In addition, some legal regulations may limit the amount of aliases allowed to be produced by a device.

In order to limit the aliases produced by the Near-Field Communication (NFC), it has been proposed to use Electro-Magnetic Compatibility (EMC) filters. The EMC filter is an anti-aliasing analog filter inserted at the antenna network terminals of the active NFC devices to reduce the spectral density of the aliases. It cuts higher order harmonics of the carrier frequency (13.56 MHz), and it is usually deployed both at the reader device RD side and at the tag-emulator device TED side. This is a very good solution for the EMC problems that can be caused by the transmitter of the active NFC device in both the reader and tag-emulation modes.

However, the EMC problems resulting from the sidebands (harmonics) of the load modulation are not solved by the EMC filter and have not been addressed so far.

According to the ISO/IEC standards, the frequency fm of the load modulation is fm = nx(13.56 /128) MHZ, with $N \in [1, 2, 4, 8]$. The sidebands are then located at Nxfm, with N=1, 2, 3, etc.

The previously described EMC filter is designed to filter out the 13.56 MHz harmonics and is therefore not efficient in filtering out the harmonics of the much lower load-modulation frequency fm.

On the other hand, it is not possible to add a second filter adapted for the fm frequency because it will filter out the carrier signal itself, resulting to the loss of all communication means between the two devices.

There is a need for a solution permitting to improve the situation.

SUMMARY OF THE INVENTION

An object of embodiments of the present invention is to alleviate at least partly the above mentioned drawbacks.

This is achieved with a method for performing electromagnetic communication consisting in transmitting modulation data to a first communication device from a second communication device, this method comprising steps of:

- Coupling a first antenna associated with the first communication device and a second antenna associated with the second communication device,
- Generating a magnetic field by supplying a carrier signal at a first frequency through said first antenna;
- Modulating the magnetic field by modifying the load associated to the second antenna according to modulating data, this load being comprised between a high value corresponding to a first value of the modulation data and a low value corresponding to a second value of the modulation data, wherein this modification of the load between two different values is done gradually.

According to embodiments of the invention, the magnetic field can be modified by changing the impedance of the electric circuit connected to the second antenna. This impedance can itself be modified from a first value to a second value by steps, which are associated to equal portions of the difference between the first value and the second values.

Each step may be produced by a respective portion of impedance added at a respective portion of time.

Another object of the invention is a computer program product comprising a computer readable medium, having thereon a computer program comprising program instructions, the computer program being loadable into a data-processing unit and adapted to cause execution of the method previously defined when the computer program is run by the data-processing unit.

Another object of the invention is a tag emulator device comprising

- an antenna adapted to create an electromagnetic coupling with another antenna of a reader device and,
- circuitry adapted to modulate a magnetic field received on this antenna by modifying the load associated to the antenna according to modulating data.

The load is comprised between a high value corresponding to a first value of the modulation data and a low value corresponding to a second value of the modulation data, and the circuitry is further adapted to modify gradually this load between two different values.

According to embodiments of the invention, the circuitry can be adapted to change its impedance so as to modify the magnetic field. This impedance may be modified from a first value to a second value by steps, these steps being associated to equal portions of the difference between the first value and the second value.

Each step can be produced by a respective portion of impedance added at a respective portion of time.

The Tag emulator device may further comprise a set of switches commanding these portions of impedance and commanded by clock signals delayed by a number of delay blocks corresponding to the respective portion of time.

Further features and advantages of embodiments of the invention will appear from the following description of some embodiments of the invention, given as nonlimiting examples, with reference to the accompanying drawings listed hereunder.

BRIEF DESCRIPTION OF THE DRAWINGS

Fig. 1, already commented, shows a high level schema of a reader device and a tag emulator device.
Fig. 2 shows a simplified schema of a tag emulator device according to an embodiment of the invention.
Fig. 3 shows an example of the evolution in time of a modulated signal according to an embodiment of the invention.
Fig. 4 shows examples of the modulated signal in the frequency space, according to various embodiments of the tag emulator device.
Fig. 5 shows a simplified schema of a possible implementation of the load modulator according to an embodiment of the invention.

DETAILED DESCRIPTION OF EMBODIMENTS OF THE INVENTION

The invention can apply to any type of communication apparatus comprising a NFC device.

Such apparatus can be for instance mobile communication terminals (or mobile phones), e.g. the more advanced terminals called "smart phones", but also communication-enabled tablets. It can also be USB keys embedding several communication functions, etc.

On the figure 2, only the NFC-related circuits have been represented in order to keep it clear. However, it should be understood that the depicted circuits are connected to other circuits within the terminal. In addition, some NFC-related circuits have also been omitted, like for instance those related to other mode of the NFC device (active mode, etc.)

The invention should not been understood as limited to the embodiment of a tag-emulating device TED shown in the figure 2.

The device depicted on figure 2 is on a tag emulation mode.

When such a tag emulator device TED is put in the vicinity of a reader device, its antenna ANT is dynamically coupled to the antenna of the reader device. The electromagnetic coupling means that the current flowing through the antenna of the reader device makes it generate a magnetic field and an induced voltage between the extremities of the antenna ANT of the tag emulator device TED.

What is meant by vicinity is dependent on the intensity of the generated current and on the characteristics of the reader device's antenna. These data are however usually defined by standards to which the devices comply. Usually, thus, the coupling is established when the two antennas are within an area of 1 to tens centimeters.

The magnetic field is generated by supplying a carrier signal at a carrier frequency fc through the antenna of the reader device.

According to the ISO/IEC standards, this carrier frequency fc is defined as fc=13.56 MHz.

The tag emulation device TED is adapted to modulate this magnetic field by modifying the load associated to its antenna, according to modulating data. The load - as seen by the antenna ANT - is comprised between a high value which correspond to a first value of the modulation data, and a low value corresponding to a second value of the modulation data. These first and second values represent the 2 possible values of a bit.

A NFC integrated chip, NFC_IC, comprises a digital modulator DM generating and transmitting modulation data LM_data to a load modulator LM.

The modulation data LM_data are a succession of bits encoding a signal to be transmitted to a reader device. The encoding scheme is out of the scope of this invention and will not be precisely described here. It is sufficient to say that different encoding schemes may be possible, like for instance the Manchester coding.

According the modulation data LM_data, the impedance between the transmissions outputs TX1, TX2 varies. As a result the load associated to the antenna ANT is modified accordingly, which implies a modulation of the magnetic field which can be detected by the reader device. The reader device can demodulate the field to reconstruct the modulation data. This way, electromagnetic communication is performed between the devices by transmitting modulation data.

The NFC integrated chip, NFC_IC and the antenna ANT are connected by two electric modules EMC_F, MC.

The MC module is a matching circuit. The values of the condensers C1, C2, C1', C2' are set so as to build a resonant circuit with the coil of the antenna, and, generally, so as the whole topology circuit matches 50 ohms between the clamps TX1, TX2.

These values can be preset but techniques also exist to automatically tune them.

The EMC_F module implements an Electromagnetic Compatibility Filter, set at the carrier frequency fc. In the depicted embodiment, it is constituted by condensers C0, C0' and inductances L0, L0'.

This EMC filter reduces the aliases, i.e. the higher order harmonics of the carrier frequency fc.

All the components are also linked by a common ground GND, connected to the TVSS clamp of the NFC integrated chip NFC_IC.

According to the invention, the modification of the load associated to the antenna ANT is done gradually between 2 values.

This can be done by gradually changing the impedance of the electric circuit connected to the antenna.

More concretely, the load modulator LM reacts on the modulation data LM_data by modifying gradually, if needed, the impedance between the clamps TX1 and TX2. The modification is needed when there is a change in the value of two subsequent bits of the modulation data LM_data, i.e. for each transition from a "0" to a "1" or from a "1" to a "0".

The load modulator may use a linear interpolation between the 2 values of the impedance between the clamps TX1 and TX2 (corresponding to the two values of the magnetic load).

The gradual modification from a value to another prevents fast jumps between the 2 values, in the modulated signal transmitted from the antenna. As known from the Fourier transform theory in signal processing, fast jumps are equivalent to the presence of higher order harmonics of the frequency of the load modulation fm. Therefore, preventing large fast jumps enables to reduce dramatically or even cancel the EMC effect created by the modulated signal.

According to a particular embodiment of the invention, the impedance is modified by steps.

These steps can be associated to equal portions of the difference between the first value and the second values.

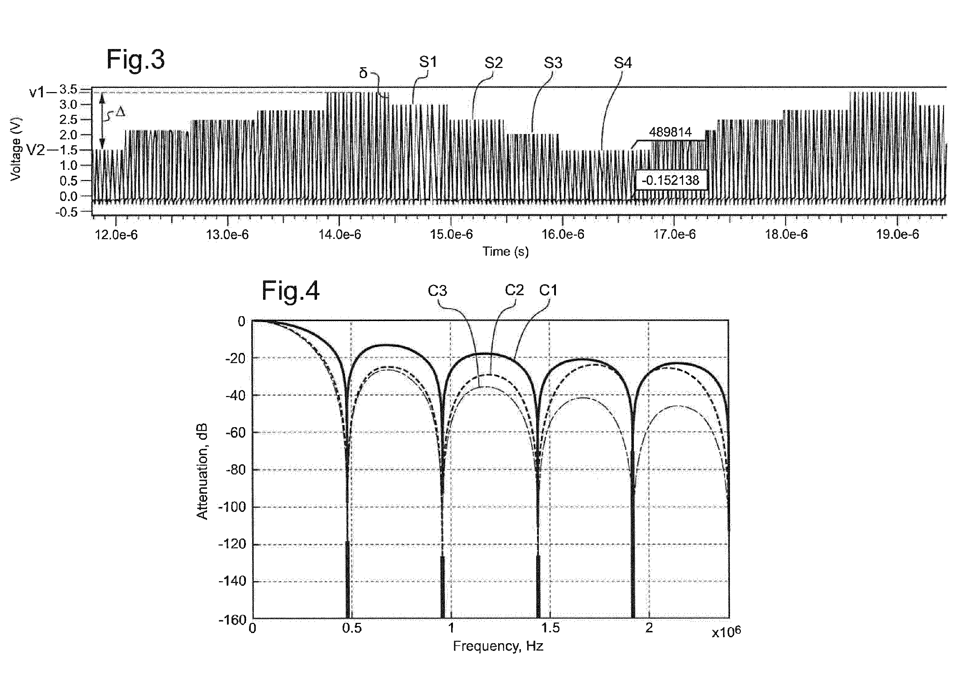

The figure 3 shows the evolution in time of a modulated signal. The horizontal axis represents the time. The vertical axis represents the voltage between the clamps TX1 and TX2. As explained earlier, this voltage is representative of the modulated signal transmitted by load modulation to the reader device.

At a time t1, the voltage is at a first value v1, corresponding to a bit at "0" in the modulation data LM_data. It is assumed that the next value for the modulation data is the opposite value (i.e. "1"). Then the voltage is gradually modified to a second (lower) value v2 by 4 steps, S1, S2, S3, S4.

Each of these steps is associated to an equal portion $\delta$ of the difference $\Delta$ between the first and second values. As there are here 4 steps, this portion $\delta$ is defined by

$$\delta = \frac{1}{4} \times \Delta,$$ with $\Delta = v2 - v1$.

More generally, the portion $\delta$ can be defined as

$$\delta = \frac{1}{L} \times (v2 - v1),$$ where L is the number of steps.

The figure 4 shows the equivalent of the modulated signal in the frequency space, as obtained by a Fourier transform.

The horizontal axis represents the offset frequency from the carrier frequency fc, while the vertical axis represents the attenuation in dB. Only the first 4 sidebands are represented as this is sufficient to understand the advantage of the invention.

The first curve C1 shows the result of a load modulation according to the state of the art, i.e. without a gradual transition from first to second values.

The curve C3 shows the result of a purely linear transition from first to second values.

The curve C2 shows the result of the previously discussed implementation with L=4 steps for the transition from first to second values.

This curve C2 shows already good results as the attenuation is below -20dB for the side bands. This represents a reduction of the aliases by 100, thanks to this embodiment of the invention. Better results can be achieved by increasing the number of steps L, so as to approximate more closely the curve C3 of the linear interpolation.

However, this increase in the number of steps may be done in the expense of silicon overhead. The value L of the number of steps is then a compromise between the wished attenuation of the aliases and the silicon overhead, it should then be chosen according to the parameters and constraints of the device or platform in which the NFC chip is embedded.

For instance, depending on the other communication circuits (GPS, FM radio, Wifi, Wimax...) with which the NFC communication function should cohabit, the constraints in term of aliases attenuation are not the same and the value L of the number of steps should be chosen accordingly.

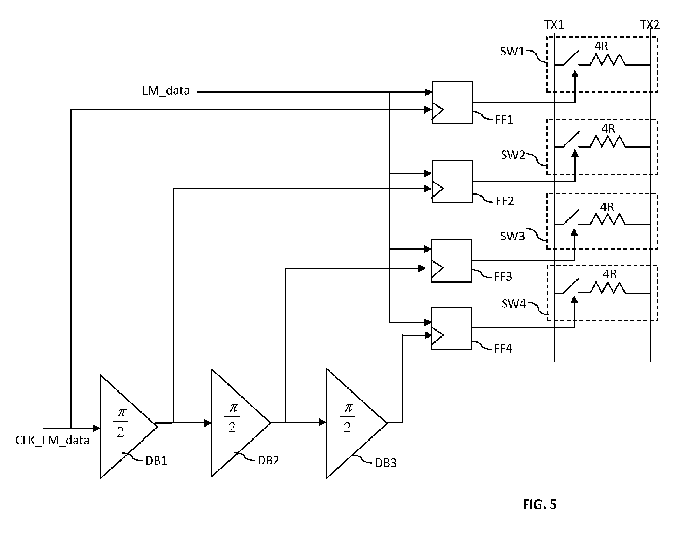

The figure 5 shows a possible implementation of the invention for actually modifying the impedance by steps from the first to the second value. This figure represents a block diagram of the load modulator LM of the figure 2.

This implementation is based on L=4 steps.

The modulation data LM_data is sent to 4 flip-flop blocks FF1, FF2, FF3, FF4.

A clock signal CLK_LM_data is generated by a clock CLK. It can be the usual clocks used for timing the load-modulation signal LM_data.

The clock signal is sent to the 4 blocks with delays generated by delay blocks DB 1, DB2, DB3. Each delay block delays the clock signal by a phase of $2\pi/4$. In other words, the block FF1 received the unmodified clock signal CLK_LM_data; the block FF2 receives the clock signal with a delay of $\pi/2$; the block FF3 receives the clock signal with a delay of $\pi$; and the block FF4 receives the clock signal with a delay of $3\pi/4$.

Each of the flip-flops FF1, FF, FF3, FF4 commands a switch SW1, SW2, SW3, SW4 respectively. They trigger the switches according to the commanding modulation data LM_data and according to the clock signal they receive. In other words, the switches change their position, each at time with a delay of $2\pi/4$.

The switches are associated with a resistance 4R, connected in parallel to the clamps TX1 and TX2.

This value 4R corresponds to a portion of impedance producing a step associated to a portion $\delta$ of the total difference between the first and second values v1, v2. When all the resistances are connected,

As the resistances 4R are put in parallel, their values add up and when the last block FF4 receives its clock signal, the total impedance equals R and it corresponds to the difference $\Delta$ between the two values of the voltage.

This way, each step is produced by a respective portion of impedance added at a respective portion of time determined by a clock delayed by a number of delay blocks DB1, DB2, DB3 corresponding to portion of time.

The invention has been described with reference to preferred embodiments. However, many variations are possible within the scope of the invention.

## Claims

1.    A method for performing electromagnetic communication consisting in transmitting modulation data to a first communication device (RD) from a second communication device (TED), said method comprising:

> - Coupling a first antenna (AR), associated with said first communication device (RD) and a second antenna (AT), associated with said second communication device (TED),
> - Generating a magnetic field by supplying a carrier signal at a first frequency (fc) through said first antenna (AR)
> - Modulating said magnetic field by modifying the load associated to said second antenna_ (AT) according to modulating data, said load being comprised between a high value corresponding to a first value of said modulation data and a low value corresponding to a second value of said modulation data,
> Wherein a modification of said load between two different values is done gradually.

2.    The method of claim 1, wherein said magnetic field is modified by changing the impedance of the electric circuit connected to said second antenna.

3.    The method of claim 2, wherein said impedance is modified from a first value to a second value by steps, which are associated to equal portions of the difference between said first value and said second values.

4.    The method of claim 3, wherein each step is produced by a respective portion of impedance added at a respective portion of time.

5. A computer program product comprising a computer readable medium, having thereon a computer program comprising program instructions, the computer program being loadable into a data-processing unit and adapted to cause execution of the method according to any of claims 1 to 4 when the computer program is run by the data-processing unit.

6. A tag emulator device (TED) comprising an antenna (AT) adapted to create an electromagnetic coupling with another antenna (AR) of a reader device (RD) and circuitry adapted to modulate a magnetic field received on said antenna (AT) by modifying the load associated to said antenna (AT) according to modulating data, said load being comprised between a high value corresponding to a first value of said modulation data and a low value corresponding to a second value of said modulation data, and said circuitry being further adapted to modify gradually said load between two different values.

7. The tag emulator device of claim 6, wherein said circuitry is adapted to change its impedance so as to modify said magnetic field.

8. The tag emulator device of claim 7, wherein said impedance is modified from a first value to a second value by steps, said steps being associated to equal portions of the difference between said first value and said second value.

9. The tag emulator device of claim 8, wherein each step is produced by a respective portion of impedance added at a respective portion of time.

10. The tag emulator device of claim 9, comprising a set of switches commanding said portions of impedance and commanded by clock signals delayed by a number of delay blocks corresponding to said respective portion of time.

FIG. 1

FIG. 2

Fig.3

Fig.4

EP 2 680 456 A1

FIG. 5

**Europäisches Patentamt**
**European Patent Office**
**Office européen des brevets**

# EUROPEAN SEARCH REPORT

Application Number

EP 12 30 5761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/015115 A1 (AVERY DENNISON CORP [US]; FORSTER IAN J [GB]) 29 January 2009 (2009-01-29) * abstract * * paragraphs [0002], [0004], [0006], [0008], [0022], [0031] - [0033], [0036], [0050] * * figure 1B * ----- | 1-10 | INV. H04B5/00 |
| X | US 2007/246546 A1 (YOSHIDA YUKO [JP]) 25 October 2007 (2007-10-25) * abstract * * paragraphs [0005], [0014], [0018] - [0021], [0024], [0026], [0028], [0045] - [0046], [0048], [0050] - [0051], [0053], [0060] * * paragraphs [0067] - [0069], [0071], [0075], [0081] * ----- | 1-10 | |

| TECHNICAL FIELDS SEARCHED (IPC) |
|---|
| H04B G08C G06K |

The present search report has been drawn up for all claims

| Place of search | Date of completion of the search | Examiner |
|---|---|---|
| The Hague | 1 November 2012 | Ntogari, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 30 5761

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2012

| Patent document cited in search report | Publication date | Patent family member(s) | Publication date |
|---|---|---|---|
| WO 2009015115 A1 | 29-01-2009 | US 2009027173 A1<br>WO 2009015115 A1 | 29-01-2009<br>29-01-2009 |
| US 2007246546 A1 | 25-10-2007 | JP 4355711 B2<br>JP 2007288718 A<br>US 2007246546 A1 | 04-11-2009<br>01-11-2007<br>25-10-2007 |

EPO FORM P0459

For more details about this annex : see Official Journal of the European Patent Office, No. 12/82